# EUROPEAN PATENT APPLICATION

(11) **EP 4 088 813 A1**
(43) Date of publication of application: **16.11.2022**
(21) Application number: 22171983.4
(22) Date of filing: 06.05.2022
(51) Int. Cl.: B01J 37/02, C04B 41/87, F01N 3/022, B05B 7/14

(54) **APPARATUS AND METHODS FOR DRY POWDER COATING A FILTER**

(30) Priority: 12.05.2021 US 202163187610 P
(71) Applicant: Johnson Matthey Public Limited Company, London EC4A 4AB (GB)
(72) Inventor: CHEN, Flora, Royston, SG8 5HE (GB); LIU, Li, Billingham, TS23 1LB (GB); SPENCER, Michael Leonard William, Royston, SG8 5HE (GB); THOMSON, Craig, Royston, SG8 5HE (GB)
(74) Representative: Armstrong, Emily

(57) **Abstract**

An apparatus (1) for dry powder coating a filter (2), comprising:
i) a filter holder for holding a filter;
ii) an inlet passage (5) for receiving a mixture of dry powder and gas, the inlet passage (5) communicating in use with an inlet face (3) of the filter (2) held by the filter holder; and
iii) an outlet passage (6) comprising a first end (31) communicating in use with an outlet face (4) of the filter (2) held by the filter holder and a second end (32) communicating with a vacuum generator (9).
The inlet passage (5) comprises a diffuser (21), and a divergent portion (22), downstream of the diffuser (21), that is outwardly tapered, or otherwise increases in its area for flow, towards the inlet face (3) of the filter (2).

## Description

The present disclosure relates to apparatus and methods for dry powder coating a filter. For example, the disclosure relates to coating a filter comprising a porous substrate having an inlet face and an outlet face, wherein the faces are separated by a porous structure. The filter may be a wall-flow filter, for example for an emissions control device of an internal combustion engine.

### Background to the Disclosure

There are concerns about emissions of particulate matter (PM), commonly referred to as soot, from internal combustion engines and especially from diesel and gasoline engines in automotive applications. The main concerns are associated with potential health effects, and, in particular, with very tiny particles having sizes in the nanometer range.

Diesel particulate filters (DPFs) and gasoline particulate filters (GPFs) have been fabricated using a variety of materials including sintered metal, ceramic or metal fibres etc., with the most common type in actual mass production being the wall-flow kind made from porous ceramic material fabricated in the form of a monolithic array of many small channels running along the length of the body. Alternate channels are plugged at one end, so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminium titanate. The actual shape and dimensions of practical filters on vehicles as well as properties such as the channel wall thickness and its porosity etc. depend on the application concerned. The average dimensions of the pores in the filter channel walls of a ceramic wall-flow filter through which the gas passes are typically in the range 5 to 50µm and usually about 20µm. In marked contrast, the size of most diesel particulate matter from a modern passenger car high speed diesel engine is very much smaller, e.g. 10 to 200nm.

Some PM may be retained within the pore structure in the filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the filter as it is deposited which prevents a particulate cake from building up on the filter.

For some filters, for example light duty diesel particulate filters, it is periodically necessary to remove trapped PM from the filter to prevent the build-up of excessive back pressure that is detrimental to engine performance and can cause poor fuel economy. So, in diesel applications, retained PM is removed from the filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the filter can lead to a marked decrease in filtration efficiency and release of a burst of many small particles into the environment. Thus, filters may have low filtration efficiency when they are first used and subsequently after each regeneration event and also during the latter part of each regeneration process.

Thus, it would be desirable to improve and or maintain filtration efficiency at all times - for example during the early life of a filter when it is first used, and or during regeneration and immediately afterwards, and or when the filter is loaded with soot.

The present applicant has discovered (as described fully in their application WO2021028691A1, which is hereby incorporated by reference in its entirety) that a filter having improved filtration efficiency during the early life of the filter when it is first used, and or during regeneration and immediately afterwards, and or when the filter is loaded with soot may be obtained by a method of treatment that comprises the steps of:
a) containing a dry powder in a reservoir;
b) locating a filter in a filter holder, the filter comprising a porous substrate having an inlet face and an outlet face, the inlet face and the outlet face being separated by a porous structure;
c) establishing a primary gas flow through the porous structure of the filter by applying a pressure reduction to the outlet face of the filter;
d) transferring the dry powder from the reservoir to a spray device located upstream of the inlet face of the filter; and
e) spraying the dry powder, using the spray device, towards the inlet face of the filter such that the dry powder is entrained in the primary gas flow and passes through the inlet face of the filter to contact the porous structure.

In WO2021028691A1 the present applicant describes how the dry powder may optionally comprise one or more of fumed alumina, fumed silica, fumed titania, silica aerogel, alumina aerogel, carbon aerogel, titania aerogel, zirconia aerogel or ceria aerogel. In particular, examples of filters are described which have been coated with a fumed aluminium oxide having a tapped density of 0.05 g/l and d50 of 5.97 microns.

While this method of treatment has been found to produce filters with improved filtration efficiency characteristics there is still a desire to further improve the treatment of such filters, in particular, to improve the durability of the treated filters.

Consequently, the present applicant has discovered (as described fully in their application GB2002483 filed 21st February 2020, which is hereby incorporated by reference in its entirety) that the durability of the treated filters may be improved by using a dry powder in the spraying process that comprises or consists of a metal compound for forming by thermal decomposition a metal oxide.

In GB2002483 the present applicant describes how it has been that the use of a metal compound that decomposes thermally into a metal oxide as the dry powder may produce substantial improvements in the durability of the treated filter compared to treatment with metal oxides including, for example, fumed aluminium oxide, especially in the ability of the dry powder to remain adhered to the porous structure and resist being de-adhered from the porous structure during subsequent operation of the filter.

Surprisingly, the present applicant has discovered that improved adhesion of these dry powders may be achieved without the presence of any additional binder or adhesion promotor or the need for any high-temperature sintering of the filter. In particular, it has been surprisingly found that the use of such dry powders may result in good adhesion while maintaining high filtration efficiencies and with acceptable cold flow back pressures.

While the methods of treatment of WO2021028691A1 and GB2002483 have been found to be effective in producing improved filters there is still a desire to improve the apparatus and methods for coating filters with dry powders, in particular to achieve more desirable distribution of the dry powder onto and/or into the porous structure of the filters.

### Summary of the Disclosure

In a first aspect the present disclosure provides an apparatus for dry powder coating a filter, the apparatus comprising:
i) a filter holder for holding a filter;
ii) an inlet passage for receiving a mixture of dry powder and gas, the inlet passage communicating in use with an inlet face of the filter held by the filter holder; and
iii) an outlet passage comprising a first end communicating in use with an outlet face of the filter held by the filter holder and a second end communicating with a vacuum generator;
wherein the inlet passage comprises:
a diffuser; and
a divergent portion, downstream of the diffuser, that is outwardly tapered, or otherwise increases in its area for flow, towards the inlet face of the filter.

Advantageously, the use of a diffuser in combination with the divergent portion has been found to improve the distribution of the dry powder onto and/or into the porous structure of the filter. In particular the distribution of the dry powder may be made more even across the inlet face of the filter. Further, the dry powder may be effectively distributed to the peripheral edge of the inlet face of the filter, even with filters, for example Heavy Duty Diesel filters, that have large diameters.

Also advantageously, the use of a diffuser in combination with the divergent portion has been found to provide an improved distribution of the dry powder that is more tolerant to changes in the parameters of the incoming mixture of dry powder and gas entering the inlet passage. For example, an improved distribution can be achieved with different geometries of the nozzle for spraying, or otherwise injecting, the dry powder into the gas flow. As such, when using the apparatus of the present disclosure, a nozzle for the dry powder may be chosen to meet a specification requirement such as powder flow rate without needing to be overly concerned with the nozzle's ability to obtain a uniform powder distribution into the flow of gas. Rather, the diffuser and the divergent portion take on the primary role of achieving the improved distribution of the dry powder at the inlet face of the filter. Such an arrangement permits better optimisation of the apparatus since the nozzle and the diffuser/divergent portion can each be chosen to meet its own functional requirements without affecting the choice of the other part. Thus, the apparatus provides a flexible, modular approach for achieving an improved distribution of the dry powder.

The divergent portion may be conical. The divergent portion may be outwardly tapered at an angle of 10° to 80°, optionally 40° to 60°, optionally 45° to 55°. The divergent portion may have an axial length of 50 to 300 mm.

The inlet passage may further comprise a neck portion between the diffuser and the divergent portion. The neck portion may be cylindrical. The neck portion may have an axial length of 0 to 40 mm, optionally 5 to 40 mm, optionally 10 to 30 mm, optionally 5 mm, 10 mm, 15 mm, 20 mm or 25 mm. The neck portion may have an internal diameter of 40 to 100 mm. The neck portion may have an internal diameter that is less than or equal to an external diameter of the diffuser.

The diffuser may be located at or adjacent to an entrance to a neck portion or at or adjacent to the divergent portion where there is no neck portion.

The inlet passage may further comprise a bypass flow gap between the diffuser and a wall of the inlet passage. The bypass flow gap may be an annular gap between an annular external edge of the diffuser and a tubular wall of the inlet passage. A width of the annular gap may be 1 to 5 mm, optionally 3 mm.

The inlet passage may further comprise a second diffuser located at or adjacent an exit of the neck portion.

The apparatus may further comprise a diffuser holder. The diffuser holder may support the diffuser from above or below such that an uninterrupted annular gap is present between an annular external edge of the diffuser and a tubular wall of the inlet passage.

Advantageously, the use of an uninterrupted annular gap may provide improved distribution of the dry powder at the inlet face of the filter, especially to the peripheral region of the inlet face. Without wishing to be bound by theory, it is believed that the annular flow of the gas and dry powder through the uninterrupted annular gap enables at least a portion of the mixture of gas and dry powder to flow in close proximity along the inner face of the divergent portion towards the peripheral region of inlet face of the filter. The absence of obstructions around the external edge of the diffuser may also reduce the creation of large eddy flows.

The inlet passage may further comprise a convergent portion upstream of and/or coincident with the diffuser that is inwardly tapered, or otherwise decreases in its area for flow, towards the diffuser. The convergent portion may be conical. The convergent portion may be inwardly tapered at an angle of 40° to 60°, optionally 45° to 55°. The convergent portion may have an axial length of 50 to 300 mm. The diffuser may be located at or adjacent to an exit of the convergent portion.

A total axial length of the inlet passage may be 400 mm or less, optionally 350 mm or less.

The diffuser may comprise a plate comprising a plurality of apertures. The diffuser may comprise guide surfaces that have an angle of inclination of 30° to 60°, optionally of 45°, to a longitudinal axis of the diffuser.

The divergent portion may be outwardly tapered at an angle that is the same as the angle of inclination of the guide surfaces of the diffuser.

The diffuser may comprise one or more mounting points for connection to one or more tie rods of the apparatus.

The inlet passage may be formed as part of a headset that can be selectively engaged with the inlet face of the filter held in the filter holder.

The inlet passage may be configured as a modular system having two or more parts that may be assembled and disassembled.

The modular system may comprise a first part comprising the convergent portion and a second part comprising the divergent portion.

The modular system may comprise a plurality of different second parts each of which has a different configuration of the divergent portion.

In a second aspect the present disclosure provides a method for treating a filter for filtering particulate matter from exhaust gas using a coating apparatus, the method comprising the steps of:
a) locating a filter in a filter holder, the filter having an inlet face and an outlet face, the inlet face and the outlet face being separated by a porous structure;
b) establishing a gas flow that passes sequentially through an inlet passage of the coating apparatus, the porous structure of the filter, and an outlet passage of the coating apparatus by applying a pressure reduction to the outlet face of the filter;
c) spraying a dry powder into the gas flow at a location upstream of the inlet face of the filter to create a mixture of dry powder and gas; and
d) drawing the mixture of dry powder and gas along the inlet passage of the coating apparatus towards and through the inlet face of the filter such that the dry powder contacts the porous structure of the filter;
wherein in the inlet passage at least a portion of the mixture of dry powder and gas is drawn through a diffuser and then passes through a divergent portion of the inlet passage that is outwardly tapered, or otherwise increases in its area for flow, on its way to the inlet face of the filter.

In the inlet passage the at least a portion of the mixture of dry powder and gas may be drawn through a neck portion after passing through the diffuser and before entering the divergent portion.

The neck portion may have an axial length of 0 to 40 mm, optionally 5 to 40 mm, optionally 10 to 30 mm, optionally 5 mm, 10 mm, 15 mm, 20 mm or 25 mm.

In the inlet passage a portion of the mixture of dry powder and gas may bypass the diffuser by passing between the diffuser and a wall of the inlet passage.

In the inlet passage the at least a portion of the mixture of dry powder and gas may be drawn through a second diffuser.

In the inlet passage the at least a portion of the mixture of dry powder and gas may be drawn through a convergent portion upstream of and/or coincident with the diffuser that is inwardly tapered, or otherwise decreases in its area for flow, towards the diffuser.

The inlet face of the filter may have a diameter, or largest characteristic dimension, of 90 to 330 mm.

In a third aspect the present disclosure provides an apparatus for dry powder coating a filter, the apparatus comprising:
i) a filter holder for holding a filter;
ii) an inlet passage for receiving a mixture of dry powder and gas, the inlet passage communicating in use with an inlet face of the filter held by the filter holder; and
iii) an outlet passage comprising a first end communicating in use with an outlet face of the filter held by the filter holder and a second end communicating with a vacuum generator;
wherein the inlet passage comprises:
a diffuser; and
an annular bypass flow gap between an annular external edge of the diffuser and a tubular wall of the inlet passage.

Advantageously, as noted above the use of an uninterrupted annular gap may provide improved distribution of the dry powder at the inlet face of the filter, especially to the peripheral region of the inlet face for the reasons set out above.

A width of the annular bypass flow gap may be 1 to 5 mm, optionally 3 mm.

The apparatus may further comprise a diffuser holder which supports the diffuser from above or below such that the annular bypass flow gap is uninterrupted around a circumference of the diffuser.

The diffuser may comprise one or more mounting points for connection to one or more tie rods of the apparatus.

The dry powder sprayed by the apparatus and used in the methods as described above may comprise or consist of one or more refractory powders, optionally comprising one or more fumed refractory powders, and or one or more aerogels. The one or more fumed refractory powders may be produced by a pyrogenic process, for example flame pyrolysis. The one or more fumed refractory powders may comprise one or more of fumed alumina, fumed silica, fumed titania, other fumed metal oxide and fumed mixed oxides. The one or more aerogels may comprises one or more of silica aerogel, alumina aerogel, carbon aerogel, titania aerogel, zirconia aerogel, ceria aerogel, a metal oxide aerogel and mixed oxide aerogels.

In these examples the dry powder may have a tapped density of less than 0.10 g/cm³, optionally less than 0.08 g/cm³, optionally less than 0.07 g/cm³, optionally less than 0.06 g/cm³, optionally less than 0.05 g/cm³. The dry powder may have a d50 (by volume) less than 25 microns, optionally less than 20 microns, optionally less than 10 microns.

The dry powder sprayed by the apparatus and used in the methods as described above may alternatively comprise or consist of a metal compound for forming by thermal decomposition a metal oxide. The dry powder may consist of a single metal compound of may consist of a mixture or blend or successive doses of two or more metal compounds. The or each metal compound may contain one or more metal cations. Where a plurality of metal cations is present these may be of the same or of different metals. The metal compound may comprise or consist of a metal hydroxide, a metal phosphate, a metal carbonate, a metal sulphate, a metal perchlorate, a metal iodide, a metal oxalate, a metal acetate, a metal chlorate or a mixture thereof. The metal of the metal compound may comprise or consist of one or more of magnesium, calcium, strontium, barium, aluminium, zirconium, manganese, lithium, iron, cobalt, nickel, copper, or gallium. The dry powder may additionally comprise a metal oxide or mixed metal oxide. Optionally the dry powder comprises 90 wt% or greater of the metal compound for forming by thermal decomposition a metal oxide and 10 wt% or less of the metal oxide or mixed metal oxide. Optionally the dry powder comprises 95 wt% or greater of the metal compound for forming by thermal decomposition a metal oxide and 5 wt% or less of the metal oxide or mixed metal oxide. Optionally the dry powder comprises 99 wt% or greater of the metal compound for forming by thermal decomposition a metal oxide and 1 wt% or less of the metal oxide or mixed metal oxide. The metal of the metal oxide or mixed metal oxide may comprise or consist of one or more of aluminium, magnesium, calcium, strontium, barium, aluminium, zirconium, manganese, lithium, iron, cobalt, nickel, copper, or gallium. Optionally the dry powder comprises or consists of a metal hydroxide, a metal phosphate, a metal carbonate or a mixture thereof. The metal hydroxide may be selected from the group consisting of magnesium hydroxide, calcium hydroxide, strontium hydroxide and barium hydroxide. The metal phosphate may be selected from the group consisting of magnesium phosphate, calcium phosphate, strontium phosphate and barium phosphate. The metal carbonate may be selected from the group consisting of magnesium carbonate, calcium carbonate, strontium carbonate and barium carbonate.

In these examples the dry powder may have a tapped density of 1 to 3 g/cm³, optionally 1.5 to 2.5 g/cm³, optionally about 2 g/cm³. The dry powder may have a d50 (by volume) less than 10 microns, optionally less than 5 microns, optionally about 2 microns.

The dry powder may consist of a single powder type or a mixture of powder types.

In this specification the term "filter" refers to a porous substrate that has a porous structure suitable for filtering particulate matter from exhaust gas. The porous substrate may be formed for example from sintered metal, ceramic or metal fibres etc. The filter may be of the wall-flow kind made from porous material, for example ceramic, fabricated in the form of a monolithic array of many small channels running along the length of the body. For example, the filter may be formed from cordierite, various forms of silicon carbide or aluminium titanate.

The filter may be a "bare" filter or alternatively may be one with an incorporated catalytic function ability such as oxidation, NOx-trapping, or selective catalytic reduction activity. The porous substrate may comprise a composition (known as a washcoat) that coats the porous structure of the filter. The washcoat may be a catalytic washcoat. The catalytic washcoat may comprise a catalyst, selected from the group consisting of a hydrocarbon trap, a three-way catalyst (TWC), a NOx absorber, an oxidation catalyst, a selective catalytic reduction (SCR) catalyst, a lean NOx catalyst and combinations of any two or more thereof. The catalyst, for example the TWC, NOx absorber, oxidation catalyst, hydrocarbon trap and the lean NOx catalyst, may contain one or more platinum group metals, particularly those selected from the group consisting of platinum, palladium and rhodium.

Consequently, the coated filter may, for example, be a catalysed soot filter (CSF), a selective catalytic reduction filter (SCRF), a lean NOx trap filter (LNTF), a gasoline particulate filter (GPF), an ammonia slip catalyst filter (ASCF) or a combination of two or more thereof (e.g. a filter comprising a selective catalytic reduction (SCR) catalyst and an ammonia slip catalyst (ASC).

The shape and dimensions of the filter, for example properties such as the channel wall thickness and its porosity etc. may be varied depending on the intended application for the filter. The filter may be configured for use with an internal combustion engine to filter the exhaust gas emitted by the internal combustion engine. The internal combustion engine may be a gasoline spark ignition engine. However, the filter finds particular application when configured for use with an internal combustion engine in the form of a diesel or gasoline engine.

In this specification the term "dry powder" refers to a particulate composition that is not suspended or dissolved in a liquid. It is not meant to necessarily imply a complete absence of all water molecules. The dry powder is optionally free flowing.

In this specification the term "tapped density" refers to the tapped density of the powder as measured according to Method 1 of Section 2.9.35 of European Pharmacopoeia 7.0 with 1250 taps.

In this specification the term "g/l" (grams per litre) refers to the mass of dry powder divided by the volume of the filter.

In this specification the terms "loading" and "mass loading" when referencing the quantity of dry powder, refer to the mass of powder added to a filter and may be measured by weighing the filter before and after application of the powder to the filter.

In this specification the term "d50 (by volume)" refers to a d50 (by volume) measurement as measured by a Malvern Mastersizer^{®} 3000 with Aero s dispersion unit, available from Malvern Panalytical Ltd, Malvern, UK. Dispersion conditions: Air pressure = 2 barg, feed rate = 65%, hopper gap = 1.2mm. Refractive index and absorbtion parameters set in accordance with instructions provided in the Malvern Mastersizer^{®} 3000 User Manual.

In this specification the term "vacuum generator" refers to an apparatus or combination of apparatus that function to produce a pressure reduction. Non-limiting examples of suitable apparatus include vacuum generators that operate on the venturi principle, vacuum pumps, for example rotary vane and liquid ring vacuum pumps, and regenerative blowers.

In this specification the term "pressure sensor" refers to an apparatus or combination of apparatus that function to measure an absolute and/or relative pressure. Non-limiting examples of suitable apparatus include pressure transducers which may be diaphragm pressure transducers. For example, a Wika^{®} P30 pressure transmitter, available from WIKA Alexander Wiegand SE & Co. KG, Klingenberg, Germany may be used.

In this specification the term "controller" refers to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc.

In this specification, ranges and amounts may be expressed as "about" a particular value or range. About also includes the exact amount. For example, "about 2 microns" means "about 2 microns" and also "2 microns." Generally, the term "about" includes an amount that would be expected to be within experimental error. The term "about" may include values that are within 5% less to 5% greater of the value provided. For example, "about 2 microns" means "between 1.9 microns and 2.1 microns".

In this specification the expression that a dry powder "consists of" means a dry powder that essentially consists of only the specified constituent(s), other than for unavoidable impurities as normally encountered as will be recognised by the person skilled in the art.

### Brief Description of the Drawings

Aspects and embodiments of the present disclosure will now be described, by way of example only, with reference to the accompanying drawings, in which:
Figure 1 is a schematic diagram of an apparatus for dry powder coating a filter;
Figure 2 is a schematic diagram of parts of the apparatus of Figure 1 and a filter;
Figure 3 is a cross-sectional view of part of the apparatus of Figure 1;
Figure 4 is a perspective view of the apparatus of Figure 3;
Figure 5 is a perspective view of an embodiment of a diffuser that can form part of the apparatus of Figure 3;
Figure 6 is a plan view of the diffuser of Figure 5;
Figure 7 is a cross-sectional view of the diffuser sectioned on line A-A of Figure 6;
Figure 8 is a perspective view of another embodiment of a diffuser that can form part of the apparatus of Figure 3;
Figure 9 is a plan view of the diffuser of Figure 8;
Figure 10 is a cross-sectional view of the diffuser sectioned on line A-A of Figure 9;
Figure 11 is a perspective view of another embodiment of a diffuser that can form part of the apparatus of Figure 3;
Figure 12 is a plan view of the diffuser of Figure 11;
Figure 13 is a cross-sectional view of the diffuser sectioned on line A-A of Figure 12;
Figure 14 is a cross-sectional view of the diffuser sectioned on line B-B of Figure 12;
Figure 15 shows diagrammatically flow through an apparatus not according to the claims;
Figures 16 and 17 show results of a CFD analysis of a first example of apparatus according to the present disclosure;
Figures 18 and 19 show results of a CFD analysis of a second example of apparatus according to the present disclosure; and
Figures 20 and 21 show results of a CFD analysis of a third example of apparatus according to the present disclosure.

### Detailed Description

The skilled reader will recognise that one or more features of one aspect or embodiment of the present disclosure may be combined with one or more features of any other aspect or embodiment of the present disclosure unless the immediate context teaches otherwise.

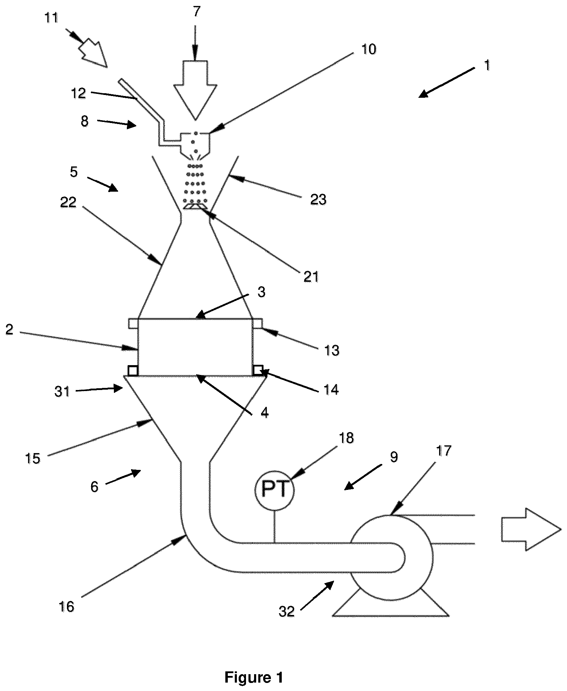

Examples of apparatus and methods in accordance with the present disclosure will now be described with reference first to Figure 1 which shows a schematic diagram of an apparatus 1 for dry powder coating a filter 2, for example a filter for filtering particulate matter from exhaust gas. The filter 2 is of a type that comprises a porous substrate having an inlet face 3 and an outlet face 4, the inlet face 3 and the outlet face 4 being separated by a porous structure.

The apparatus 1 comprises a filter holder for holding the filter 2, an inlet passage 5 and an outlet passage 6.

The apparatus may also comprise, for example, a source 7 of dry powder, a spray device 8 and a vacuum generator 9.

The filter holder may function to maintain the filter 2 in a stationary position during coating. The filter holder may grip an upper and/or a lower end of the filter 2. The filter holder may comprise an inflatable upper seal bladder 13 (also called an upper inflatable collar) and/or an inflatable lower seal bladder 14 (also called a lower inflatable collar) that support respective upper and lower ends of the filter 2. The inflatable upper seal bladder 13 and the inflatable lower seal bladder 14 may contact and/or engage with an exterior surface of the filter 2. Each may form a liquid or air-tight seal around the filter 2. The inflatable upper seal bladder 13 and the inflatable lower seal bladder 14 may be supported by one or more housings (e.g. supported by an internal wall of the one or more housings). The filter 2 may be located in the filter holder in a vertical orientation with the inlet face 3 of the filter 2 uppermost.

The source 7 may be any suitable source for containing and transporting the dry powder to the spray device 8. For example, the source 7 may comprise a reservoir such as a hopper. The source 7 may comprise a dosing device for dosing the dry powder by, for example, weight, volume, particle number, or time. The source 7 may comprise a transport device for transporting the dry powder to the spray device 8 such as, for example, a gravimetric or volumetric feed for the dry powder. Additionally or alternatively, the spray device 8 may draw the dry powder towards the spray device 8 by a venturi-effect.

The spray device 8 may be any suitable device for conveying the dry powder into the inlet passage 5. Preferably the dry powder is sprayed into the inlet passage 5. The spray device 8 may comprises one or more outlets for the dry powder. The one or more outlets may be provided in one or more spray nozzles 10 as shown in the example of Figure 1. One or more outlets may be located outside the inlet passage 5 and orientated to direct the dry powder into the inlet passage 5. For example, one or more outlets may be provided above an inlet of the inlet passage 5 as shown, by example in Figure 1, where the spray nozzle 10 is located just above the inlet of the inlet passage 5. Additionally or alternatively, one or more outlets may be located inside the inlet passage 5. The one or more outlets may be orientated at any suitable angle relative to a longitudinal axis of the inlet passage 5. For example, the one or more outlets may spray the dry powder in a direction parallel to the longitudinal axis. The one or more outlets may be aligned coincident with the longitudinal axis.

The spray device 8 may comprise a source 11 of pressurised gas, for example, air, that is provided to mobilise and spray the dry powder out of the one or more outlets of the spray device 8. For example, the source 11 may be a compressed air generator having a compressor that receives air from an air inlet and supplies compressed air to the one or more outlets via a feed line 12.

The outlet passage 6 comprises a first end 31 communicating in use with the outlet face 4 of the filter 2 held by the filter holder and a second end 32 that communicates with a vacuum generator 9. The vacuum generator 9 may be provided for establishing in use a primary gas flow through the inlet passage 5 and the porous structure of the filter 2 by applying a pressure reduction to the outlet face 4 of the filter 2 via the outlet passage 6. The first end 31 of the outlet passage 6 may be coupled directly or indirectly to the outlet face 4. The first end 31 may be in the form of a vacuum cone 15 that may define a funnel that has a wider end that engages the outlet face 4 of the filter 2 and a narrower end that communicates with a conduit 16 that leads to the vacuum generator 9. The inflatable lower seal bladder 14 may form a seal between the outlet face 4 of the filter 2 and the vacuum cone 15.

The vacuum generator 9 may comprise a vacuum pump 17 connected to the vacuum cone 15 by the conduit 16. The vacuum pump 17 may be controlled by a controller to control the volumetric flow rate of the primary gas flow.

The vacuum generator 9 and/or the outlet passage 6 may be provided with a volumetric flow rate sensor. The volumetric flow rate sensor may be an orifice plate in combination with one or more pressure sensors 18 located along the conduit 16. The apparatus 1 may further comprises a pressure sensor for monitoring a back pressure of the filter 2. A single pressure sensor may be used. The single pressure sensor may be located in the vacuum generator 9, the conduit 16 or the vacuum cone 15.

The controller may control operation of, for example, the vacuum generator 9 and the spray device 8. The controller may also be configured to control the transport of the dry powder from the source 7 to the spray device 8 independently of controlling the primary gas flow produced by the vacuum generator 9. For example, the controller may control operation of a dosing device of the source 7. The controller may be configured to control spraying of the dry powder towards the inlet face 3 of the filter 2 independently of controlling the primary gas flow. Use of the term 'independently' in the present specification refers to the ability of the controller to control each of the variables of the spraying of the dry powder and the primary gas flow individually and irrespective of the status of the other variable. For example, the controller may establish the primary gas flow without simultaneously spraying the dry powder. For example, the controller may increase or decrease the rate of spraying of the dry powder without altering the volumetric flow rate of the primary gas flow. For example, the controller may increase or decrease the volumetric flow rate of the primary gas flow without altering the rate of spraying of the dry powder. For example, the controller may control operation of the spray device 8 independently of controlling operation of the vacuum generator 9.

The inlet passage 5 is suitable for receiving a mixture of dry powder and gas. The gas may, for example, be the primary gas flow generated by operation of the vacuum generator 9 and/or a flow of gas from the spray device 8. For example, operation of the vacuum generator 9 may set up the primary gas flow such that gas is drawn into an inlet 20 of the inlet passage 5. The inlet 20 may be open to the surrounding atmosphere such that the gas is drawn into the inlet 20 directly from atmosphere. Alternatively, the inlet 20 may be coupled to an upstream conduit such that gas is drawn into the inlet 20 from said upstream conduit.

A flow of gas from the spray device 8 may be injected into the inlet passage 5. In the illustrated example of Figure 1 gas enters the inlet passage 5 due to both effects - gas is drawn into the inlet 20 from atmosphere by the suction force generated by the vacuum generator 9 and additional gas is injected (together with the dry powder) by the spray device 8.

Mixing of the dry powder and gas may occur in the inlet passage 5. Additionally, mixing of the dry powder and gas may occur before the dry powder reaches the inlet passage 5, e.g. in the spray device 8 and/or any conduit connected upstream of the inlet passage 5.

The inlet passage 5 communicates in use with the inlet face 3 of the filter 2 held by the filter holder.

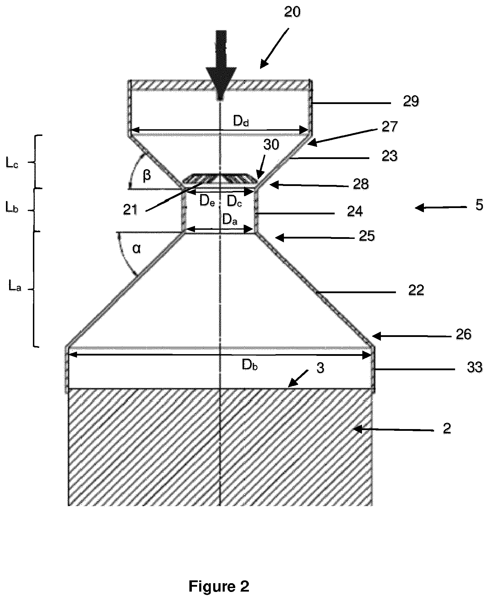

As shown schematically in Figure 2, the inlet passage 5 comprises a diffuser 21 and a divergent portion 22, downstream of the diffuser 21, that is outwardly tapered, or otherwise increases in its area for flow, towards the inlet face 3 of the filter 2. Additionally, the inlet passage 5 may comprise a convergent portion 23 and a neck portion 24.

The divergent portion 22 functions to constrain and channel the flow of gas and dry powder towards the inlet face 3 of the filter 2. The divergent portion 22 may be tubular. The divergent portion 22 may be conical. The divergent portion 22 may be outwardly tapered at an angle *α* of 10° to 80°, optionally 40° to 60°, optionally 45° to 55°, as shown in Figure 2. The walls of the divergent portion 22 may have an inclusive angle of 20° to 160°, optionally 80° to 120°, optionally 90° to 110°.

The divergent portion 22 may have an axial length *Lₐ* of 50 to 300 mm. An upstream end 25 of the divergent portion 22 may have an inner diameter *Dₐ* of 40 to 100 mm. This inner diameter *Dₐ* may be the same as an inner diameter *D_{c}* of the neck portion 24. A downstream end 26 of the divergent portion 22 may have an inner diameter *D_{b}* that may be substantially the same as the diameter of the inlet face 3 of the filter 2. The downstream end 26 may be circular, oval or another shape. The shape of the downstream end 26 may match the shape of the inlet face 3 of the filter 2.

The inlet passage 5 may further comprise an additional tubular portion 33 between the downstream end 26 and the inlet face 3 of the filter 2. The additional tubular portion 33 may be cylindrical. A downstream end of the additional tubular portion 33 may be circular, oval or another shape. The shape may match the shape of the inlet face 3 of the filter 2.

Where present, the neck portion 24 is located between the diffuser 21 and the divergent portion 22. The neck portion 24 may be cylindrical and may have an axial length *L_{b}* of 0 to 40 mm, optionally 5 to 40 mm, optionally 10 to 30 mm, optionally 5 mm, 10 mm, 15 mm, 20 mm or 25 mm. The internal diameter *D_{c}* of the neck portion 24 may be 40 to 100 mm.

The convergent portion 23 may be inwardly tapered, or otherwise decrease in its area for flow, towards the neck portion 24 and/or the divergent portion 22. The convergent portion 23 functions to constrain and channel the flow of gas and dry powder towards the neck portion 24 and/or the divergent portion 22. The convergent portion 23 may be tubular. The convergent portion 23 may be conical. The convergent portion may be inwardly tapered at an angle *β* of 40° to 60°, optionally 45° to 55°. The walls of the convergent portion 23 may have an inclusive angle of 80° to 120°, optionally 90° to 110°.

The convergent portion 23 may have an axial length *L_{c}* of 50 to 300 mm. An upstream end 27 of the convergent portion 23 may have an inner diameter *D_{d}* of 140 to 700 mm. A downstream end 28 of the convergent portion 23 may have an inner diameter *Dₑ* of 40 to 100 mm. This inner diameter *Dₑ* may be the same as the inner diameter *D_{c}* of the neck portion 24.

The inlet passage 5 may further comprise an additional tubular portion 29 upstream of the upstream end 27 of the convergent portion 23. The additional tubular portion 29 may be cylindrical.

The diffuser 21 may be located at or adjacent to an exit of the convergent portion 23, i.e. at or adjacent to the downstream end 28 where it connects to the neck portion 24 or divergent portion 22 (if no neck portion is present). In some examples the diffuser 21 may be located in the neck portion 24. However, it is preferred for the diffuser 21 to be located in the convergent portion 23 at or adjacent to (e.g. just upstream of) an entrance to the neck portion 24, for example towards the downstream end 28 of the convergent portion 23.

The internal diameter *D_{c}* of the neck portion 24 may be less than or equal to an external diameter of the diffuser 21.

The inlet passage 5 preferably further comprises a bypass flow gap 30 between the diffuser 21 and a wall of the inlet passage 5. For example, the bypass flow gap 30 may be an annular gap between an annular external edge of the diffuser 21 and a tubular wall of the inlet passage 5, for example the conical wall of the convergent portion 23. A width of the annular gap may be 1 to 5 mm, optionally 3 mm.

In some examples the inlet passage 5 may further comprise a second diffuser located at or adjacent an exit of the neck portion 24, preferably within the neck portion 24.

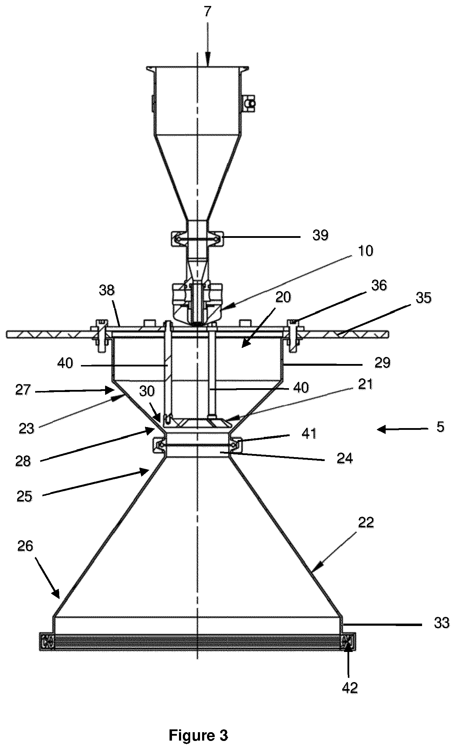

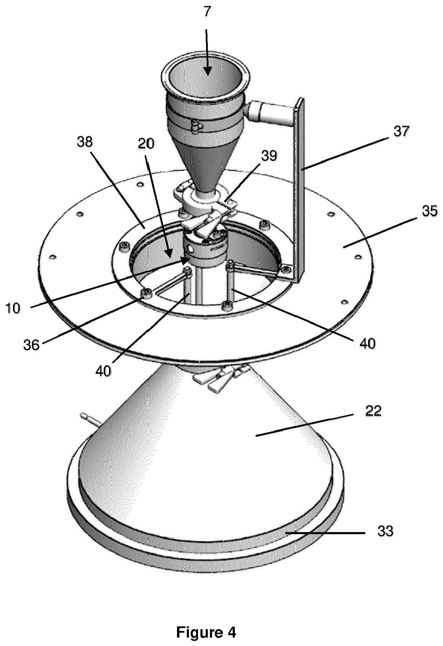

Figures 3 and 4 show an example of the inlet passage 5 in more detail and illustrates additional constructional details. The inlet passage 5 is mounted to a support plate 35, in particular with a flange of the upstream end 27 of the convergent portion 23 being fixed by bolts 36 to an underside of the support plate 35. The source 7 for the dry powder, in the form of a hopper, is also mounted to the support plate 35 via a support arm 37 and support ring 38 as visible in Figure 4. The spray device 8, in the form of spray nozzle 10, is mounted to depend from the hopper by use of a clamp and seal arrangement 39.

The diffuser 21 is mounted to the support ring 38 and support plate 35 via a diffuser holder. The diffuser holder, in the example of Figures 3 and 4 comprises two L-shaped tie rods 40 that extend downwardly through the additional tubular portion 29 and within the convergent portion 23. As shown in Figure 3, the tie rods 40 support the diffuser 21 from above. In this way the bypass flow gap 30 may be kept uninterrupted, i.e. may form a continuous annular gap around the whole circumference of the diffuser 21.

As shown in Figure 3, the inlet passage 5 may be formed in more than one piece. For example, the inlet passage 5 may be a modular system having two or more parts that may be assembled and disassembled. For example, the modular system may have a first part that comprises the convergent portion 23 and a second part that comprises the divergent portion 22. The first part and/or the second part may optionally comprise at least a part of the neck portion 24. Alternatively, the neck portion 24 may be comprises by a third part of the modular system.

A clamp and seal arrangement, or other suitable means, may be provided to assemble the first part and the second part together. For example, in the illustrated example of Figure 3 a clamp and seal arrangement 41 may be provided to couple the first part and the second part together at a joint. The joint may be provided within the neck portion 24.

The modular system may comprise a plurality of different second parts each of which may have a different configuration of the divergent portion 22. For example, each second part may differ in one or more of the axial length Lₐ, inner diameter Dₐ, inner diameter D_{b}, angle *α*, and cross-sectional shape at the downstream end 26. Each second part may optionally be assembled to the same first part. In this way, the inlet passage 5 may be easily configured for use with different filters 2 and/or for different processes without having to alter the configuration or positioning of the first part that comprises, for example, the convergent portion 23 and the diffuser 21. Thus, the first part may be configured as a permanent or base part of the inlet passage 5 and the second part may be configured as a swappable part of the inlet passage 5.

The downstream end 26 of the divergent portion 22 may be provided with a seal 42, for example an inflatable collar, for coupling the inlet passage 5 to the filter 2. This seal may be the inflatable upper seal bladder 13 of the filter holder or an additional seal.

The inlet passage 5 may form part of a headset that can be selectively engaged with the inlet face 3 of the filter 2. A total axial length *L_{d}* of the inlet passage may be 400 mm or less, optionally 350 mm or less.

The diffuser 21 comprises guide surfaces and apertures. The guide surfaces function to guide the flow of gas and dry powder as is passes over and/or through the diffuser 21. The apertures function to permit gas and dry powder to pass through the diffuser 21. The guide surfaces may promote mixing of the dry powder in the gas and may alter the distribution of the particles of the dry powder within the flow of the gas. The guide surfaces may thus alter the distribution of the dry powder within the flow of the gas. The guide surface may have an angle of inclination of 30° to 60°, optionally of 45°, to a longitudinal axis of the diffuser 21. The guide surfaces are preferably outwardly tapered, i.e. such that flow of gas and dry powder passing over the guide surfaces is directed outwardly towards the tubular wall of the inlet passage 5. The angle *α* of the outward taper of the divergent portion 22 may be the same as the angle of inclination of the guide surfaces of the diffuser 21.

The diffuser 21 may have an order of rotational symmetry of 2, 3, 4, or more.

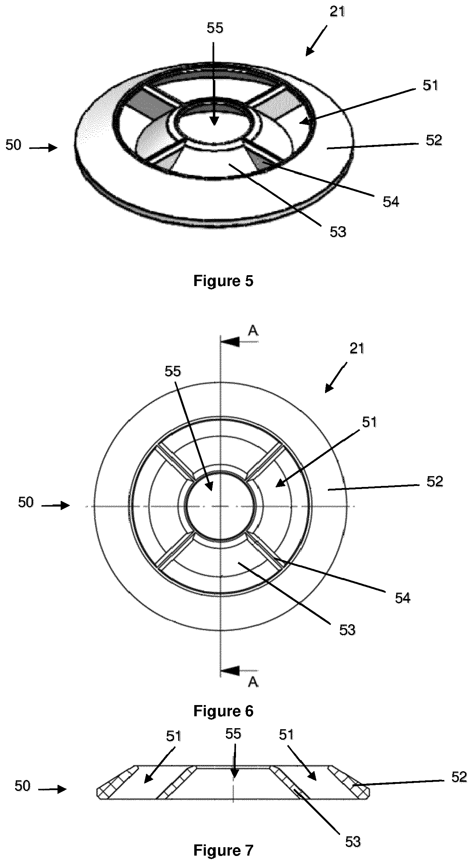

Figures 5 to 7 show one example of a diffuser 21 of the apparatus 1. The diffuser 21 comprises a plate 50 comprising a plurality of apertures 51. The plate 50 may be disc-shaped, for example circular. The plate 50 may comprise an outer ring 52 and an inner ring 53 with the apertures 51 located in between. One or more ribs 54 may connect the outer ring 52 and inner ring 53. As shown, four ribs 54 may be provided defining four apertures 51.The ribs 54 may be radial in orientation. The inner ring 53 may comprise a central aperture 55.

The surfaces of the outer ring 52 and the inner ring 53 constitute guide surfaces of the diffuser 21. In particular, the upper surfaces (those facing upstream in use) may form the guide surfaces. The upper faces of the outer ring 52 and inner ring 53 may have an angle of inclination of 30° to 60°, optionally of 45°, to a longitudinal axis of the diffuser 21, as shown in Figure 7.

This diffuser 21 has an order of rotational symmetry of 4.

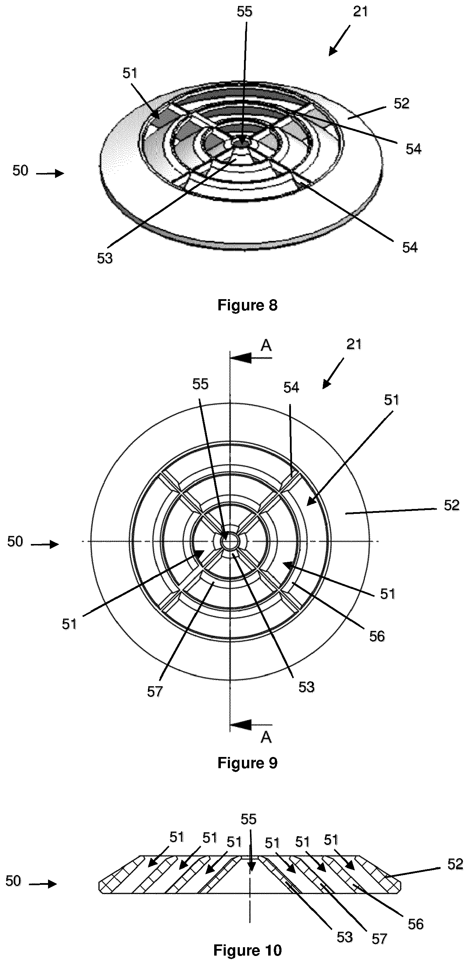

Figures 8 to 10 show another example of a diffuser 21 of the apparatus 1. The diffuser 21 is similar to that of the previous example but includes four rings, the outer ring 52, the inner ring 53 and two intermediate rings 56, 57. Thus, three annular arrangement of apertures 51 are provided as well as the central aperture 55.

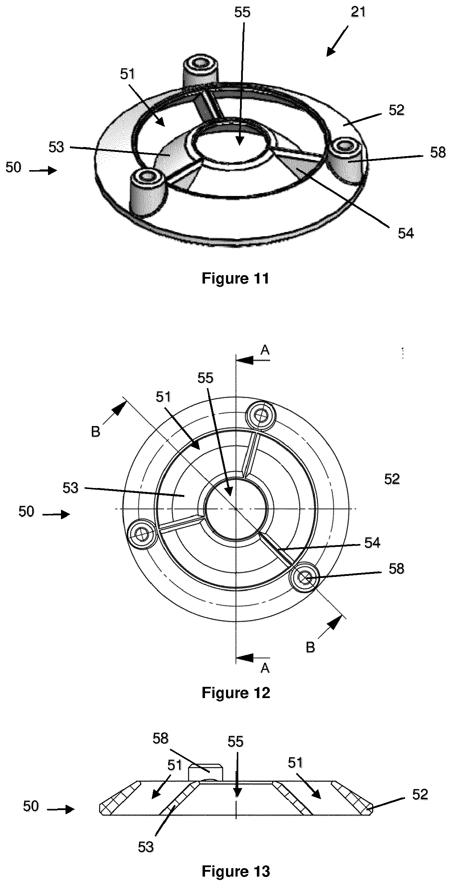

Figures 11 to 14 show another example of a diffuser 21 of the apparatus 1. The diffuser 21 is similar to that of the first example but includes three ribs 54 rather than four. In addition, mounting points 58 for connection to the tie rods 40 are provided in an upper face of the diffuser 21.

This diffuser 21 has an order of rotational symmetry of 3.

The apparatus 1, and in particular the inlet passage 5, may be used to coat a filter with a dry powder comprising or consisting of one or more refractory powders, optionally comprising one or more fumed refractory powders, and or one or more aerogels. Additionally or alternatively, the apparatus 1 may be used to coat a filter with a dry powder comprising or consisting of a metal compound for forming by thermal decomposition a metal oxide. In examples the metal compound may comprise or consist of a metal hydroxide, a metal phosphate, a metal carbonate, a metal sulphate, a metal perchlorate, a metal iodide, a metal oxalate, a metal acetate, a metal chlorate or a mixture thereof.

The filter 2 being coated with the dry powder may be provided with a catalytic coating as known in the art prior to coating with the dry powder. A washcoat prepared from a catalytic slurry by methods as known in the art may be used. The washcoat may be, for example, a hydrocarbon trap, a three-way catalyst (TWC), a NOx absorber, an oxidation catalyst, a selective catalytic reduction (SCR) catalyst, a lean NOx catalyst and combinations of any two or more thereof. The filter 2 may be calcined after application of the catalytic coating.

In an example of the use of the apparatus 1, the filter 2 may first be loaded into the filter holder. The filter 2 may be held in a stationary position during treatment. The filter 2 may be gripped by the filter holder at an upper and/or a lower end of the filter 2. The inflatable upper seal bladder 13 and the inflatable lower seal bladder 14 may be inflated to contact and/or engage with the exterior surface of the filter 2. The filter 2 may be held in a vertical orientation with the inlet face 3 of the filter uppermost. Operation of the filter holder, for example inflation of the inflatable upper seal bladder 13 and the inflatable lower seal bladder 14 may be controlled by the controller.

The vacuum generator 9 may activated by the controller to establish the primary gas flow through the inlet passage 5, the filter 2, and the outlet passage 6. Optionally, the primary gas flow is established before the dry powder is transferred to the spray nozzle 10 of the spray device 8 and sprayed towards the inlet face 3 of the filter 2. A level of the pressure reduction generated by the vacuum generator 9 may be controlled by the controller independently of a speed or mass rate of the transfer of the dry powder from the source 7 to the spray device 8. The primary gas flow may have a volumetric flow rate of 10 m³/hr to 5,000 m³/hr, optionally 400 m³/hr to 2,000 m³/hr, optionally 600 m³/hr to 1000 m³/hr.

The dry powder may be sprayed into the inlet passage 5 towards the inlet face 3 of the filter 2 by the spray device 8. The dry powder passes along the additional tubular portion 29 and the convergent portion 23 towards the diffuser 21.

As the gas and dry powder transits the convergent portion 23 the particles of the dry powder may undergo a blending effect wherein the particles are mixed in the gas flow.

On reaching the diffuser 21 at least a portion of the gas and dry powder may pass over the guide surfaces of the diffuser 21 and through the apertures 51 of the diffuser 21. A portion of the gas and dry powder may pass through the central aperture 55. Some gas and dry powder may be guided by the guide surfaces to flow around the exterior of the diffuser, i.e. to pass through the annular bypass flow gap 30. For example, this may occur for gas and dry powder contacting the outer ring 52. A portion of the gas and dry powder may pass through the annular bypass flow gap 30 without first contacting the diffuser 21. For example, this may occur for gas and/or dry powder flowing close to the tubular wall of the inlet passage, e.g. laminar flow along the tubular wall.

The diffuser acts to further blend and redistribute the dry powder in the flow of gas.

After exiting or bypassing the diffuser 21 the gas and dry powder transits the neck portion 24 where further blending may occur.

The gas and dry powder then transit the divergent portion 22. Advantageously, the divergent portion 22 may act to distribute the particles of dry powder more evenly across the flow cross-section and in particular may assist flow of dry powder to the peripheral edge of the inlet face 3 of the filter 2. This may assist in obtaining a more uniform distribution of the dry powder entering the filter 2 across the inlet face 3.

During coating the back pressure of the filter 2 may be monitored. The back pressure may be monitored by use of the pressure sensor. The controller may be configured to stop the spraying of the dry powder towards the inlet face 3 of the filter 2 when, for example, a pre-determined back pressure is reached. The pre-determined back pressure may be an absolute back pressure. The absolute back pressure may be between 20-180 mbar at a flowrate of 600 m³/hr. Alternatively, the pre-determined back pressure may be a relative back pressure. In addition, or alternatively, spraying of the dry powder towards the inlet face 3 of the filter 2 may be stopped when a pre-determined total spraying time is reached.

The method may be configured to deliver a maximum loading of the filter of 10 to 40 g/l, optionally 15 to 30 g/l, optionally about 20 g/l of the dry powder; or to deliver a maximum loading of the filter of <10 g/l, optionally <5 g/l, optionally <2 g/l of the dry powder.

### Examples

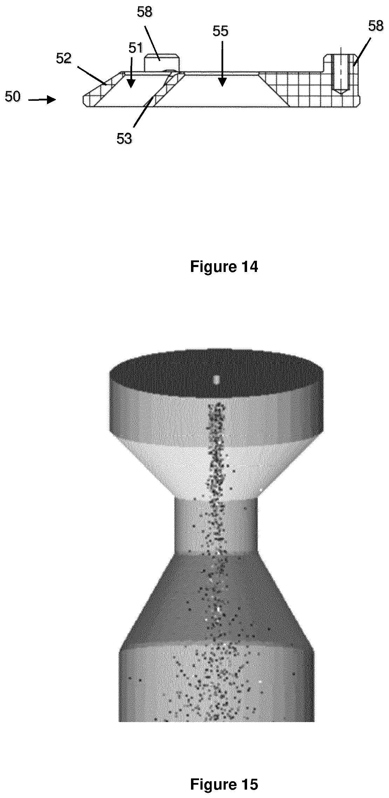

Figure 15 shows flow of dry powder and gas through an inlet passage that is not provided with a diffuser. The presence of the neck portion and the divergent portion can be seen to result in some spreading and mixing of the dry powder in the gas flow. However, the resulting powder dispersion is heavily concentrated to a centre region of the inlet face of the filter with little of the dry powder reaching a peripheral region of the inlet face.

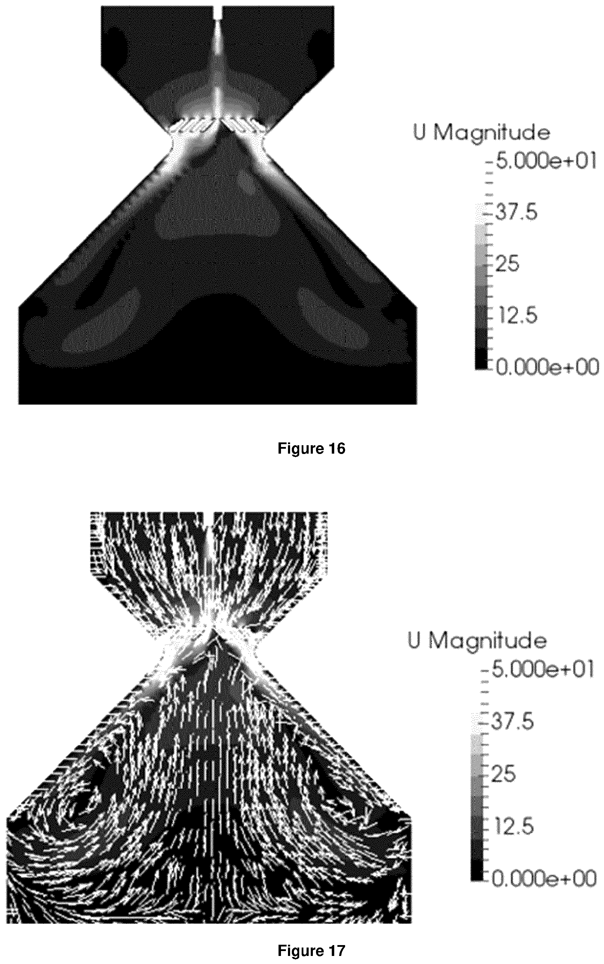

Figures 16 and 17 show results of a CFD analysis of a first example of apparatus 1 according to the present disclosure. In this example the neck portion 24 has an axial length *L_{b}* of 5 mm. The diffuser 21 is of the type shown in Figures 8 to 10.

The CFD analysis demonstrates, that compared to the example of Figure 15, the dry powder is more evenly distributed across the entire inlet face of the filter. In particular, dry powder is enabled to reach even the peripheral region of the inlet face due to the combined effect of the diffuser and the divergent portion. It is also noticeable that the flow in the divergent portion contains some relatively large-scale eddy flows. These eddy flows may be beneficial in promoting mixing of the dry powder with the gas flow. However, they may also, as shown, result in some flow in the region of the inlet face being substantially along the inlet face (e.g. transverse to the longitudinal axis) in the mid-region of the inlet face between the centre and the periphery. Such flows can be beneficial in that they can act to dislodge any build-up of dry powder on the walls of the channels on the surface of the inlet face. However, they may result in some unevenness of the dry powder quantity entering the channels across the inlet face.

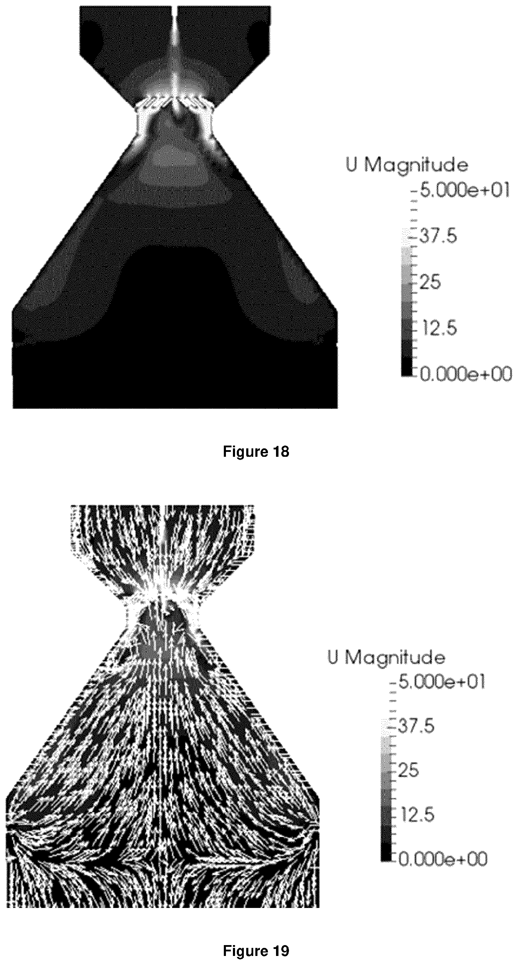

Figures 18 and 19 show results of a CFD analysis of a second example of apparatus 1 according to the present disclosure. In this example the neck portion 24 has an axial length *L_{b}* of 10 mm. The diffuser 21 is of the type shown in Figure 8 to 10.

The CFD analysis again demonstrates that compared to the example of Figure 15, the dry powder is more evenly distributed across the entire inlet face of the filter. In particular, dry powder is enabled to reach even the peripheral region of the inlet face due to the combined effect of the diffuser and the divergent portion. It is also noticeable that the eddy flows in the divergent portion have been significantly reduced compared to the example of Figures 16 and 17. Beneficially, in the region near the inlet face the flow across the whole inlet face is substantially parallel to the longitudinal axis and the transverse flows experienced in the example of Figures 16 and 17 have been eliminated. However, there is apparent some unevenness in the quantity of dry powder across the face of the inlet filter. For example, the quantity of the dry powder entering at the centre and the periphery is marginally greater than in the mid-region.

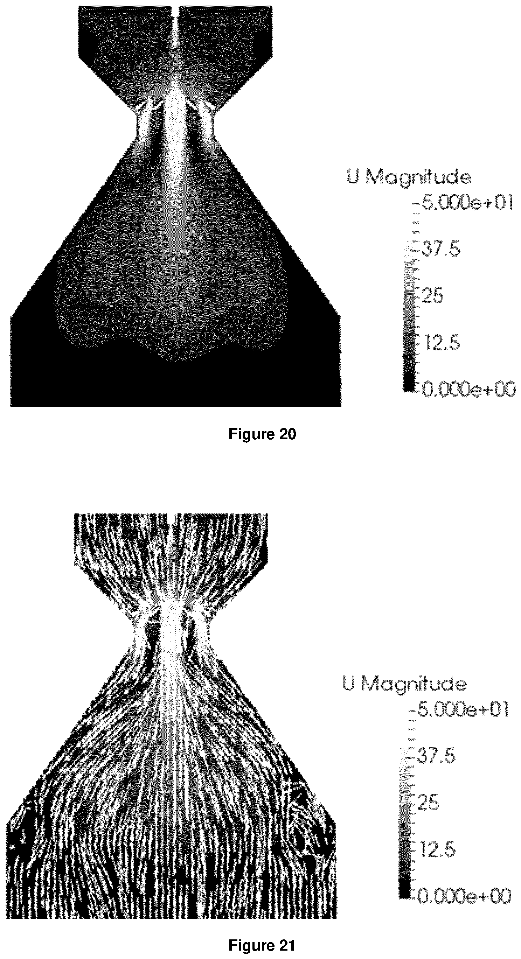

Figures 20 and 21 show results of a CFD analysis of a third example of apparatus 1 according to the present disclosure. In this example the neck portion 24 has an axial length *L_{b}* of 10 mm . The diffuser 21 is of the type shown in Figures 5 to 7.

The CFD analysis demonstrates that the dry powder is more evenly distributed across the entire inlet face of the filter. Similar to the example of Figures 18 and 19, the flow entering the inlet face is substantially parallel to the longitudinal axis across the entire inlet face. In addition the flow is very even across the inlet face and more so than in the example of Figures 18 and 19. It is noted that eddy flows in the divergent portion are substantially eliminated and the flow entering the inlet face is very stable - as can be seen by the fact that the flow lines are straight and parallel across the inlet face for a significant distance above the inlet face.

The apparatus of the present disclosure may be configured to coat a variety of shapes and sizes of filters.

In one non-limiting example, the inlet passage 5 is configured with the following dimensions for coating a substrate of diameter 330.2 mm:
- The divergent portion 22 is outwardly tapered at an angle *α* of 55° so that the walls of the divergent portion 22 have an inclusive angle of 70°;
- The divergent portion 22 has an axial length *Lₐ* of 225 mm;
- The upstream end 25 of the divergent portion 22 has an inner diameter *Dₐ* of 73 mm;
- The downstream end 26 of the divergent portion 22 has an inner diameter *D_{b}* of 335 mm;
- The neck portion 24 has an axial length *L_{b}* of 28 mm;
- The internal diameter *D_{c}* of the neck portion 24 is 73 mm;
- The convergent portion is inwardly tapered at an angle *β* of 45° such that the walls of the convergent portion 23 have an inclusive angle of 90°;
- The convergent portion 23 has an axial length *L_{c}* of 112 mm;
- The upstream end 27 of the convergent portion 23 has an inner diameter *D_{d}* of 196 mm; and
- The downstream end 28 of the convergent portion 23 has an inner diameter *Dₑ* of 73 mm.

Further aspects and embodiments of the present disclosure are set out in the following clauses:
Clause A1. An apparatus for dry powder coating a filter, the apparatus comprising:
   i) a filter holder for holding a filter;
   ii) an inlet passage for receiving a mixture of dry powder and gas, the inlet passage communicating in use with an inlet face of the filter held by the filter holder; and
   iii) an outlet passage comprising a first end communicating in use with an outlet face of the filter held by the filter holder and a second end communicating with a vacuum generator;
   wherein the inlet passage comprises:
   a diffuser; and
   a divergent portion, downstream of the diffuser, that is outwardly tapered, or otherwise increases in its area for flow, towards the inlet face of the filter.
Clause A2. The apparatus of clause A1, wherein the divergent portion is conical.
Clause A3. The apparatus of clause A1 or clause A2, wherein the divergent portion is outwardly tapered at an angle of 10° to 80°, optionally 40° to 60°, optionally 45° to 55°.
Clause A4. The apparatus of any preceding clause, wherein the divergent portion has an axial length of 50 to 300 mm.
Clause A5. The apparatus of any preceding clause, wherein the inlet passage further comprises a neck portion between the diffuser and the divergent portion.
Clause A6. The apparatus of clause A5, wherein the neck portion is cylindrical.
Clause A7. The apparatus of clause A5 or clause A6, wherein the neck portion has an axial length of 0 to 40 mm, optionally 5 to 40 mm, optionally 10 to 30 mm, optionally 5 mm, 10 mm, 15 mm, 20 mm or 25 mm.
Clause A8. The apparatus of any one of clauses A5 to A7, wherein the neck portion has an internal diameter of 40 to 100 mm.
Clause A9. The apparatus of any one of clauses A5 to A8, wherein the neck portion has an internal diameter that is less than or equal to an external diameter of the diffuser.
Clause A10. The apparatus of any preceding clause, wherein the diffuser is located at or adjacent to an entrance to a neck portion or at or adjacent to the divergent portion where there is no neck portion.
Clause A11. The apparatus of any preceding clause, wherein the inlet passage further comprises a bypass flow gap between the diffuser and a wall of the inlet passage.
Clause A12. The apparatus of clause A11, wherein the bypass flow gap is an annular gap between an annular external edge of the diffuser and a tubular wall of the inlet passage.
Clause A13. The apparatus of clause A12, wherein a width of the annular gap is 1 to 5 mm, optionally 3 mm.
Clause A14. The apparatus of any preceding clause, wherein the inlet passage further comprises a second diffuser located at or adjacent an exit of the neck portion.
Clause A15. The apparatus of any preceding clause, wherein the apparatus further comprises a diffuser holder.
Clause A16. The apparatus of clause A15, wherein the diffuser holder supports the diffuser from above or below such that an uninterrupted annular gap is present between an annular external edge of the diffuser and a tubular wall of the inlet passage.
Clause A17. The apparatus of any preceding clause, wherein the inlet passage further comprises a convergent portion upstream of and/or coincident with the diffuser that is inwardly tapered, or otherwise decreases in its area for flow, towards the diffuser.
Clause A18. The apparatus of clause A17, wherein the convergent portion is conical.
Clause A19. The apparatus of clause A17 or clause A18, wherein the convergent portion is inwardly tapered at an angle of 40° to 60°, optionally 45° to 55°.
Clause A20. The apparatus of any one of clauses A17 to A19, wherein the convergent portion has an axial length of 50 to 300 mm.
Clause A21. The apparatus of any one of clauses A17 to A20, wherein the diffuser is located at or adjacent to an exit of the convergent portion.
Clause A22. The apparatus of any preceding clause, wherein a total axial length of the inlet passage is 400 mm or less, optionally 350 mm or less.
Clause A23. The apparatus of any preceding clause, wherein the diffuser comprises a plate comprising a plurality of apertures.
Clause A24. The apparatus of any preceding clause, wherein the diffuser comprises guide surfaces that have an angle of inclination of 30° to 60°, optionally of 45°, to a longitudinal axis of the diffuser.
Clause A25. The apparatus of clause A24, wherein the divergent portion is outwardly tapered at an angle that is the same as the angle of inclination of the guide surfaces of the diffuser.
Clause A26. The apparatus of any preceding clause, wherein the diffuser comprises one or more mounting points for connection to one or more tie rods of the apparatus.
Clause A27. The apparatus of any preceding clause, wherein the inlet passage is formed as part of a headset that can be selectively engaged with the inlet face of the filter held in the filter holder.
Clause A28. The apparatus of any preceding clause, wherein the inlet passage is configured as a modular system having two or more parts that may be assembled and disassembled.
Clause A29. The apparatus of clause A28, wherein the modular system comprises a first part comprising the convergent portion and a second part comprising the divergent portion.
Clause A30. The apparatus of clause A29, wherein the modular system comprises a plurality of different second parts each of which has a different configuration of the divergent portion.
Clause B1. A method for treating a filter for filtering particulate matter from exhaust gas using a coating apparatus, the method comprising the steps of:
   a) locating a filter in a filter holder, the filter having an inlet face and an outlet face, the inlet face and the outlet face being separated by a porous structure;
   b) establishing a gas flow that passes sequentially through an inlet passage of the coating apparatus, the porous structure of the filter, and an outlet passage of the coating apparatus by applying a pressure reduction to the outlet face of the filter;
   c) spraying a dry powder into the gas flow at a location upstream of the inlet face of the filter to create a mixture of dry powder and gas; and
   d) drawing the mixture of dry powder and gas along the inlet passage of the coating apparatus towards and through the inlet face of the filter such that the dry powder contacts the porous structure of the filter;
   wherein in the inlet passage at least a portion of the mixture of dry powder and gas is drawn through a diffuser and then passes through a divergent portion of the inlet passage that is outwardly tapered, or otherwise increases in its area for flow, on its way to the inlet face of the filter.
Clause B2. The method of clause B1, wherein in the inlet passage the at least a portion of the mixture of dry powder and gas is drawn through a neck portion after passing through the diffuser and before entering the divergent portion.
Clause B3. The method of clause B2, wherein the neck portion has an axial length of 0 to 40 mm, optionally 5 to 40 mm, optionally 10 to 30 mm, optionally 5 mm, 10 mm, 15 mm, 20 mm or 25 mm.
Clause B4. The method of any one of clauses B1 to B3, wherein in the inlet passage a portion of the mixture of dry powder and gas bypasses the diffuser by passing between the diffuser and a wall of the inlet passage.
Clause B5. The method of any one of clauses B1 to B4, wherein in the inlet passage the at least a portion of the mixture of dry powder and gas is drawn through a second diffuser.
Clause B6. The method of any one of clauses B1 to B5, wherein in the inlet passage the at least a portion of the mixture of dry powder and gas is drawn through a convergent portion upstream of and/or coincident with the diffuser that is inwardly tapered, or otherwise decreases in its area for flow, towards the diffuser.
Clause B7. The method of any one of clauses B1 to B6, wherein the inlet face of the filter has a diameter, or largest characteristic dimension, of 90 to 330 mm.
Clause C1. An apparatus for dry powder coating a filter, the apparatus comprising:
   i) a filter holder for holding a filter;
   ii) an inlet passage for receiving a mixture of dry powder and gas, the inlet passage communicating in use with an inlet face of the filter held by the filter holder; and
   iii) an outlet passage comprising a first end communicating in use with an outlet face of the filter held by the filter holder and a second end communicating with a vacuum generator;
   wherein the inlet passage comprises:
   a diffuser; and
   an annular bypass flow gap between an annular external edge of the diffuser and a tubular wall of the inlet passage.
Clause C2. The apparatus of clause C1, wherein a width of the annular bypass flow gap is 1 to 5 mm, optionally 3 mm.
Clause C3. The apparatus of clause C1 or clause C2, further comprising a diffuser holder which supports the diffuser from above or below such that the annular bypass flow gap is uninterrupted around a circumference of the diffuser.
Clause C4. The apparatus of any one of clauses C1 to C3, wherein the diffuser comprises one or more mounting points for connection to one or more tie rods of the apparatus.
Clause D1. The apparatus or method of any one of clauses A1 to A30 or B1 to B7 or C1 to C4, wherein the dry powder comprises or consists of:
   a) a metal compound for forming by thermal decomposition a metal oxide;
   b) a metal oxide; or
   c) an aerogel.
Clause D2. The apparatus or method of clause D1, wherein the metal compound comprises or consists of a metal hydroxide, a metal phosphate, a metal carbonate, a metal sulphate, a metal perchlorate, a metal iodide, a metal oxalate, a metal acetate, a metal chlorate or a mixture thereof.
Clause D3. The apparatus or method of clause D1 or D2, wherein the metal of the metal compound comprises or consists of one or more of magnesium, calcium, strontium, barium, aluminium, zirconium, manganese, lithium, iron, cobalt, nickel, copper, or gallium.
Clause D4. The apparatus or method of any one of clauses D1 to D3, wherein the metal oxide of option c) comprises one or more fumed metal oxides or fumed mixed oxides, for example fumed alumina, fumed silica, or fumed titania.
Clause D5. The apparatus or method of any one of clauses D1 to D4, wherein the aerogel comprises one or more of silica aerogel, alumina aerogel, carbon aerogel, titania aerogel, zirconia aerogel, ceria aerogel, a metal oxide aerogel and mixed oxide aerogels.
Clause D6. The apparatus or method of any one of clauses D1 to D5, wherein the dry powder has a tapped density of 1 to 3 g/cm³, optionally 1.5 to 2.5 g/cm³, optionally about 2 g/cm³.
Clause D7. The apparatus or method of any one of clauses D1 to D6, wherein the dry powder has a d50 (by volume) less than 10 microns, optionally less than 5 microns, optionally about 2 microns.

## Claims

1. An apparatus for dry powder coating a filter, the apparatus comprising:
i) a filter holder for holding a filter;
ii) an inlet passage for receiving a mixture of dry powder and gas, the inlet passage communicating in use with an inlet face of the filter held by the filter holder; and
iii) an outlet passage comprising a first end communicating in use with an outlet face of the filter held by the filter holder and a second end communicating with a vacuum generator;
wherein the inlet passage comprises:
a diffuser; and
a divergent portion, downstream of the diffuser, that is outwardly tapered, or otherwise increases in its area for flow, towards the inlet face of the filter.

2. The apparatus of claim 1, wherein the divergent portion is conical.

3. The apparatus of claim 1 or claim 2, wherein the divergent portion is outwardly tapered at an angle of 10° to 80°, optionally 40° to 60°, optionally 45° to 55°.

4. The apparatus of any preceding claim, wherein the inlet passage further comprises a neck portion between the diffuser and the divergent portion.

5. The apparatus of claim 4, wherein the neck portion has an axial length of 0 to 40 mm, optionally 5 to 40 mm, optionally 10 to 30 mm, optionally 5 mm, 10 mm, 15 mm, 20 mm or 25 mm.

6. The apparatus of claim 4 or claim 5, wherein the neck portion has an internal diameter of 40 to 100 mm.

7. The apparatus of any preceding claim, wherein the diffuser is located at or adjacent to an entrance to a neck portion or at or adjacent to the divergent portion where there is no neck portion.

8. The apparatus of any preceding claim, wherein the inlet passage further comprises a bypass flow gap between the diffuser and a wall of the inlet passage.

9. The apparatus of claim 8, wherein the bypass flow gap is an annular gap between an annular external edge of the diffuser and a tubular wall of the inlet passage.

10. The apparatus of claim 9, wherein a width of the annular gap is 1 to 5 mm, optionally 3 mm.

11. The apparatus of any preceding claim, wherein the apparatus further comprises a diffuser holder and the diffuser holder supports the diffuser from above or below such that an uninterrupted annular gap is present between an annular external edge of the diffuser and a tubular wall of the inlet passage.

12. The apparatus of any preceding claim, wherein the inlet passage further comprises a convergent portion upstream of and/or coincident with the diffuser that is inwardly tapered, or otherwise decreases in its area for flow, towards the diffuser.

13. The apparatus of claim 12, wherein the convergent portion is conical.

14. A method for treating a filter for filtering particulate matter from exhaust gas using a coating apparatus, the method comprising the steps of:
a) locating a filter in a filter holder, the filter having an inlet face and an outlet face, the inlet face and the outlet face being separated by a porous structure;
b) establishing a gas flow that passes sequentially through an inlet passage of the coating apparatus, the porous structure of the filter, and an outlet passage of the coating apparatus by applying a pressure reduction to the outlet face of the filter;
c) spraying a dry powder into the gas flow at a location upstream of the inlet face of the filter to create a mixture of dry powder and gas; and
d) drawing the mixture of dry powder and gas along the inlet passage of the coating apparatus towards and through the inlet face of the filter such that the dry powder contacts the porous structure of the filter;
wherein in the inlet passage at least a portion of the mixture of dry powder and gas is drawn through a diffuser and then passes through a divergent portion of the inlet passage that is outwardly tapered, or otherwise increases in its area for flow, on its way to the inlet face of the filter.

15. An apparatus for dry powder coating a filter, the apparatus comprising:
i) a filter holder for holding a filter;
ii) an inlet passage for receiving a mixture of dry powder and gas, the inlet passage communicating in use with an inlet face of the filter held by the filter holder; and
iii) an outlet passage comprising a first end communicating in use with an outlet face of the filter held by the filter holder and a second end communicating with a vacuum generator;
wherein the inlet passage comprises:
a diffuser; and
an annular bypass flow gap between an annular external edge of the diffuser and a tubular wall of the inlet passage.

16. The apparatus of claim 15, wherein a width of the annular bypass flow gap is 1 to 5 mm, optionally 3 mm.
